# EUROPEAN PATENT SPECIFICATION

(11) **EP 3 462 112 B1**
(45) Date of publication and mention of the grant of the patent: **02.10.2024**
(21) Application number: 16907179.2
(22) Date of filing: 30.12.2016
(51) Int. Cl.: F25D 29/00, G05B 9/02, G05B 19/042, G06F 11/07, G05B 23/02, G06F 11/30

(54) **REFRIGERATOR, INTELLIGENT DETECTION METHOD THEREOF, AND INTELLIGENT DETECTION SYSTEM**
KÜHLSCHRANK, VERFAHREN DAFÜR ZUR INTELLIGENTEN DETEKTION UND SYSTEM ZUR INTELLIGENTEN DETEKTION
RÉFRIGÉRATEUR, SON PROCÉDÉ DE DÉTECTION INTELLIGENT ET SYSTÈME DE DÉTECTION INTELLIGENT

(30) Priority: 27.06.2016 CN 201610482196
(43) Date of publication of application: 03.04.2019
(73) Proprietor: Qingdao Haier Joint Stock Co., Ltd, Qingdao, Shandong 266101 (CN)
(72) Inventor: WU, Yong, Qingdao Shandong 266101 (CN); DANG, Guangming, Qingdao Shandong 266101 (CN); LIAO, Xin, Qingdao Shandong 266101 (CN); ZHAO, Qinghai, Qingdao Shandong 266101 (CN); WANG, Jie, Qingdao Shandong 266101 (CN); TANG, Ying, Qingdao Shandong 266101 (CN); ZENG, Hao, Qingdao Shandong 266101 (CN)
(74) Representative: Ziebig Hengelhaupt Intellectual Property Attorneys Patentanwaltskanzlei PartGmbB
(86) International application number: PCT/CN2016/113932
(87) International publication number: WO 2018/000792

(56) References cited:
- EP-A2- 2 476 984
- CN-A- 104 567 265
- CN-A- 106 123 476
- US-A1- 2002 029 575
- US-A1- 2003 009 610
- US-A1- 2012 054 712
- US-A1- 2014 216 071
- US-A1- 2014 216 071

## Description

### Technical Field

The present invention relates to household appliances, and in particular, to a refrigerator, and an intelligent detection method and intelligent detection system thereof.

### Background of the Invention

Internet of Things is another global informatization wave after computers, Internet, and mobile communication, and is a new stage of global informatization development. With the rising of the concept of Internet of Things, intelligentization of products in the household appliance industry is accelerated, and a series of intelligent refrigerators are launched.

Usually, an APP is disposed on an existing intelligent refrigerator, and the APP may be configured to communicate with the outside to acquire information required by a user, and may further be configured to communicate with the refrigerator to implement intelligentization of the refrigerator. Correspondingly, during a running process of the APP, a problem may occur, for example, a running error, a bug, or a crash. When the problem occurs, the user usually cannot locate the problem immediately. In addition, when a child or an elder uses the refrigerator, he or she usually does not actively resolve the problem. Sometimes, an after-sales service person needs to update the APP on site to resolve the foregoing problem, and as a result, time and energy are wasted, and use costs of the user are increased. US 2012054712A1 relates to an intelligent communications device for a smart grid, for managing interconnection of various electrical devices and facilities. US 2003009610A1 relates to a control system for a refrigerator. US 2002029575A1 relates to remote inspection of an operating state of a refrigerator itself and control of the refrigerator to be inspected. US 2014216071A1 relates to utilizing a portable electronic device to interact with a variety of refrigeration appliances including commercial, residential and/or industrial ice makers, refrigerators, and/or freezers.

### Summary of the Invention

One of the objectives of the present invention is to provide a refrigerator, and an intelligent detection method and detection system thereof, so as to overcome at least one defect in the prior art.

The invention is set out in the appended claims.

According to the intelligent detection method and detection system for a refrigerator in the present invention, the APP disposed on the refrigerator actively sends the running monitoring signal to the refrigerator in real time, and the running status of the APP is automatically monitored and adjusted according to the number of times and time of receiving and sending the running monitoring signal, to ensure normal running of the APP, improve running efficiency of the refrigerator, and reduce human resources and costs.

According to the detailed description of specific embodiments of the present invention below with reference to the accompanying drawings, the foregoing and other objectives, advantages, and features will become more apparent to a person skilled in the art.

### Brief Description of the Drawings

Some of specific embodiments of the invention will be described below in detail with reference to the accompanying drawings by way of example but not by way of limitation. The same reference signs indicate the same or similar components or parts in the accompanying drawings. It is understood by persons skilled in the art that the accompanying drawings are not necessarily drawn to scale. In the accompanying drawings:
FIG. 1 is a schematic flow diagram of an intelligent detection method for a refrigerator according to an embodiment of the present invention; and
FIG. 2 is a schematic diagram of modules of an intelligent detection system for a refrigerator according to an embodiment of the present invention.

### Detailed Description of the Invention

The present invention is described in detail below with reference to specific embodiments shown in the accompanying drawings.

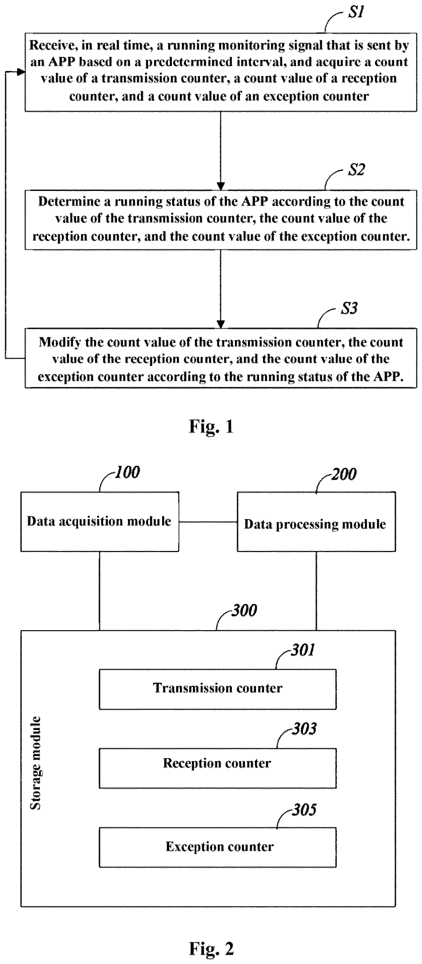

To implement the foregoing objective of the present invention, as shown in FIG. 1, an embodiment of the present invention provides an intelligent detection method for a refrigerator. The method comprises:
S 1. Receive, in real time, a running monitoring signal that is sent by an APP based on a predetermined interval, and acquire a count value of a transmission counter used for recording the number of times of sending the running monitoring signal, a count value of a reception counter used for recording the number of times of receiving the running monitoring signal, and a count value of an exception counter used for recording the number of times of error occurrences of the APP.

Correspondingly, if the APP sends the running monitoring signal within the predetermined interval, the count value of the transmission counter is increased;
if the running monitoring signal is received within the predetermined interval, the count value of the reception counter is increased; and
if an error occurs on the APP, the count value of the exception counter is increased.

The predetermined interval is a system-preset threshold, and it may be changed according to user needs, and is a time unit. During actual application, a length of the predetermined interval affects, to some extent, the determination of the running status of the APP. When the predetermined interval is excessively short, a frequency of sending and receiving the running monitoring signal is excessively high, leading to an increase in power consumption of the refrigerator. When the predetermined interval is excessively long, it does not help to determine the running status of the APP. Usually, the predetermined interval is in a unit of minute. In this way, running power consumption of the refrigerator can be balanced, and determining of the running status of the APP can be considered. Details are not described herein.

With the development of intelligent household appliances, an intelligent device is usually disposed on a household appliance such as a refrigerator, and correspondingly, softwares such as an APP may be downloaded on the intelligent device, to meet user needs.

In this embodiment, at the time of factory shipment of the device, monitoring software is embedded into the APP, to establish a communication connection between the APP and the refrigerator, and implement automatic monitoring and adjustment on the APP. Certainly, if a user adds a new APP when using a refrigeration device such as a refrigerator, monitoring software is also correspondingly embedded into the new APP. It may be understood that, usually, multiple APPs are disposed on the refrigerator. Correspondingly, an operating system of the refrigerator may communicate with one of the APPs at the same time, or simultaneously communicate with the multiple APPs. Details are not described herein.

Correspondingly, the transmission counter, the reception counter, and the exception counter may be disposed on the APP end, or may be disposed on the operating system of the refrigerator. Details are not described herein.

In the present invention, during a process in which the APP communicates with the refrigerator, data exchange may be implemented by using a bi-directional communication connection, and each connection end is referred to as a socket whose Chinese name is " 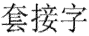 ". When the APP communicates with the refrigerator, the APP sends a request to a network or responds to a request of a network by using the "socket". A network connection process is as follows:
A target to which a socket is to connect is searched for according to a connection starting manner. A connection process between sockets may be divided into three steps: monitoring by a server, requesting by a client, and connection acknowledgment. In this example, the server is the operating system of the refrigerator, and the client is the APP.

Monitoring by the server means that a socket of the server end does not specifically locate a socket of the client, but is in a connection-waiting state, and monitors a network status in real time.

Requesting by the client means that a socket of the client sends a connection request, and a to-be-connected target is the socket of the server end. Therefore, the socket of the client needs to first describe the socket of the server to which the socket of the client is to connect, specify an address and a port number of the socket of the server end, and then send the connection request to the socket of the server end.

Connection acknowledgment means that when the socket of the server end obtains through monitoring or receives the connection request of the socket of the client end, the socket of the server end responds to the request of the socket of the client, establishes a new thread, and sends a description of the socket of the server to the client. Once the client acknowledges the description, the connection is established. The socket of the server end remains in a monitoring state, and continues to receive connection requests of sockets of other clients.

Further, the method further comprises:
S2. Determine a running status of the APP according to the count value of the transmission counter, the count value of the reception counter, and the count value of the exception counter.

In a specific example of the present invention, if the running monitoring signals sent by the APP are constantly received when each predetermined interval arrives,
step S2 specifically comprises:
M1. determining the running status of the APP according to a size relationship between the count value of the transmission counter and the count value of the reception counter, and
if the count value of the transmission counter is equal to the count value of the reception counter, entering step M2, and
if the count value of the transmission counter is less than the count value of the reception counter, entering step M3;
M2. determining whether the count value of the reception counter is greater than or equal to a system-preset threshold of receiving count, and
if yes, determining that the APP is in a good running state, and
if not, determining that the APP is in a normal running state;
M3. determining whether the count value of the exception counter is greater than or equal to a system-preset threshold of exception count, and
if yes, determining that the APP is in an abnormal state, and restarting the APP, and
if not, determining that the APP is in a critical normal state.

If the running monitoring signals sent by the APP are not constantly received when each predetermined interval arrives,
step S2 specifically comprises:
P1. determining the running status of the APP according to the count value of the reception counter, and
if the count value of the reception counter is zero, determining that the APP is in an abnormal state, and restarting the APP, and
if the count value of the reception counter is not zero, entering step P2;
P2. determining whether the count value of the exception counter is greater than or equal to a system-preset threshold of exception count, and
if yes, determining that the APP is in an abnormal state, and restarting the APP, and
if not, determining that the APP is in a critical normal state.

The system-preset threshold of receiving count and the system-preset threshold of exception count both are system-preset thresholds, may be changed according to a user demand, and both are a unit of quantity.

Further, the method further comprises:
S3. Modify the count value of the transmission counter, the count value of the reception counter, and the count value of the exception counter according to the running status of the APP.

In an embodiment of the present invention, step S3 specifically comprises: if it is determined that the APP is in the good running state, restoring the count value of the transmission counter, the count value of the reception counter, and the count value of the exception counter to an initial state;
if it is determined that the APP is in the normal running state, independently increasing the count value of the transmission counter and the count value of the reception counter, and keeping the count value of the exception counter unchanged;
if it is determined that the APP is in the abnormal state, restoring the count value of the transmission counter, the count value of the reception counter, and the count value of the exception counter to an initial state; and
if it is determined that the APP is in the critical normal state, increasing the count value of the exception counter, and restoring the count value of the transmission counter and the count value of the reception counter to an initial state.

For ease of understanding the present invention, a specific example in which the intelligent detection method for a refrigerator in the present invention is used for automatically monitoring the running status of the refrigerator is described below.

In this example,
The following setting is made: a running monitoring signal is sent every three minutes, the system-preset threshold of receiving count is 60, and the system-preset threshold of exception count is 10.

The count value of the transmission counter, the count value of the reception counter, and the count value of the exception counter are acquired in real time.

### Embodiment I:

Assuming that the APP constantly sends the running monitoring signals within 180 minutes, and the refrigerator normally receives the running monitoring signals, after 180 minutes, the count value of the transmission counter and the count value of the reception counter both are 60, and the count value of the exception counter is zero. In this case, it is determined that the APP is in the good running state, and each of the count value of the transmission counter, the count value of the reception counter, and the count value of the exception counter is restored to the initial state.

Therefore, the transmission counter, the reception counter, and the exception counter all restart counting.

### Embodiment II:

It is assumed that a problem occurs during running of the APP. For example, the APP suddenly restarts automatically, and continues to send the running monitoring signal when a 3-minute predetermined interval arrives. In this case, because the APP restarted automatically, the count value of the transmission counter is restored to 0, and the count value of the reception counter continues to increase. In addition, because the APP restarted automatically, the count value of the exception counter is changed, further, it is necessary to determine whether the count value of the exception counter is greater than 10. If yes, it is determined that the APP is in the abnormal state, the APP is restarted, and the count value of the transmission counter, the count value of the reception counter, and the count value of the exception counter are restored to the initial state, so that the transmission counter, the reception counter, and the exception counter all restart counting.

If not, it is determined that the APP is in the critical normal state, the count value of the exception counter is increased, and each of the count value of the transmission counter and the count value of the reception counter is restored to the initial state.

Subsequently, if the APP keeps running normally over a future time period, when the count value of the reception counter is greater than or equal to the system-preset threshold of receiving count, the APP is restarted, to restart counting.

If errors continually occur on the APP over a future time period, when the count value of the exception counter is greater than or equal to the system-preset threshold of exception count, the APP is restarted, to restart counting.

Embodiment III: it is assumed that a problem occurs during running of the APP. For example, the APP crashes just after being restarted, that is, the count value of the transmission counter and the count value of the reception counter both are zero. In this case, it is determined that the APP is in the abnormal state, the APP is restarted, and each of the count value of the transmission counter, the count value of the reception counter, and the count value of the exception counter is restored to the initial state, so that the transmission counter, the reception counter, and the exception counter all restart counting.

Embodiment IV: it is assumed that a problem occurs during running of the APP. For example, the APP crashes after running for a time period, and the running monitoring signals cannot be constantly sent or received when a 3-minute predetermined interval arrives. In this case, the count value of the transmission counter and the count value of the reception counter are not zero, and it is further determined whether the count value of the exception counter is greater than 10. If yes, it is determined that the APP is in the abnormal state, the APP is restarted, and each of the count value of the transmission counter, the count value of the reception counter, and the count value of the exception counter is restored to the initial state, so that the transmission counter, the reception counter, and the exception counter all restart counting.

If not, it is determined that the APP is in the critical normal state, the count value of the exception counter is increased, and each of the count value of the transmission counter and the count value of the reception counter is restored to the initial state.

Subsequently, if the APP keeps running normally over a future time period, when the count value of the reception counter is greater than or equal to the system-preset threshold of receiving count, the APP is restarted, to restart counting.

If errors continually occur on the APP over a future time period, when the count value of the exception counter is greater than or equal to the system-preset threshold of exception count, the APP is restarted, to restart counting.

As shown in FIG. 2, an embodiment of the present invention provides an intelligent detection system. The system comprises: a data acquisition module 100, a data processing module 200, and a storage module 300, wherein the storage module 300 comprises: a transmission counter 301 used for recording the number of times of sending a running monitoring signal, a reception counter 303 used for recording the number of times of receiving a running monitoring signal, and an exception counter 305 used for recording the number of times of error occurrences of an APP.

The data acquisition module 100 is configured to receive, in real time, a running monitoring signal that is sent by the APP based on a predetermined interval, and acquire a count value of the transmission counter 301, a count value of the reception counter 303, and a count value of the exception counter 305.

Correspondingly, if the APP sends the running monitoring signal within the predetermined interval, the data processing module 200 increases the count value of the transmission counter 301.

If the running monitoring signal is received within the predetermined interval, the data processing module 200 increases the count value of the reception counter 303.

If an error occurs on the APP, the data processing module 200 increases the count value of the exception counter 305.

The predetermined interval is a system-preset threshold, may be changed according to a user demand, and is a time unit. During actual application, a length of the predetermined interval affects, to some extent, determining of the running status of the APP. When the predetermined interval is excessively short, a frequency of sending and receiving the running monitoring signal is excessively high, leading to an increase in power consumption of the refrigerator. When the predetermined interval is excessively long, it does not help to determine the running status of the APP. Usually, the predetermined interval is in a unit of minute. In this way, running power consumption of the refrigerator can be balanced, and determining of the running status of the APP can be considered. Details are not described herein.

With the development of intelligent household appliances, usually, an intelligent device is disposed on a household appliance such as a refrigerator, and correspondingly, software such as an APP may be downloaded on the intelligent device, to meet a user demand.

In this embodiment, at the time of factory shipment of the device, monitoring software is embedded into the APP, to establish a communication connection between the APP and the refrigerator, and implement automatic monitoring and adjustment on the APP. Certainly, if a user adds a new APP when using a refrigeration device such as a refrigerator, monitoring software is correspondingly also embedded into the new APP. It may be understood that, usually, multiple APPs are disposed on the refrigerator. Correspondingly, an operating system of the refrigerator may communicate with one of the APPs at the same time, or simultaneously communicate with the multiple APPs. Details are not described herein.

Correspondingly, the transmission counter, the reception counter 303, and the exception counter 305 may be disposed on the APP end, or may be disposed on the operating system of the refrigerator. Details are not described herein.

The data processing module 200 determines a running status of the APP according to the count value of the transmission counter 301, the count value of the reception counter 303, and the count value of the exception counter 305.

In a specific example of the present invention, the data acquisition module 100 constantly receives the running monitoring signals sent by the APP when each predetermined interval arrives,
then:
the data processing module 200 is specifically configured to:
determine the running status of the APP according to a size relationship between the count value of the transmission counter 301 and the count value of the reception counter 303;
if the count value of the transmission counter 301 is equal to the count value of the reception counter 303, determine whether the count value of the reception counter 303 is greater than or equal to a system-preset threshold of receiving count, and
if yes, determine that the APP is in a good running state, and
if not, determine that the APP is in a normal running state;
if the count value of the transmission counter 301 is less than the count value of the reception counter 303, determine whether the count value of the exception counter 305 is greater than or equal to a system-preset threshold of exception count, and
if yes, determine that the APP is in an abnormal state, and restart the APP, and
if not, determine that the APP is in a critical normal state.

If the data acquisition module 100 does not constantly receive the running monitoring signals sent by the APP when each predetermined interval arrives,
the data processing module 200 is specifically configured to:
determine the running status of the APP according to the count value of the reception counter 303;
if the count value of the reception counter 303 is zero, determine that the APP is in an abnormal state, and restart the APP, and
if the count value of the reception counter 303 is not zero, determine whether the count value of the exception counter 305 is greater than or equal to a system-preset threshold of exception count, and
if yes, determine that the APP is in an abnormal state, and restart the APP, and
if not, determine that the APP is in a critical normal state.

The system-preset threshold of receiving count and the system-preset threshold of exception count both are also system-preset thresholds, may be changed according to a user demand, and both are a unit of quantity.

Further, the data processing module 200 is configured to modify the count value of the transmission counter 301, the count value of the reception counter 303, and the count value of the exception counter 305 according to the running status of the APP.

In an embodiment of the present invention,
the data processing module 200 is specifically configured to:
if it is determined that the APP is in the good running state, restore the count value of the transmission counter 301, the count value of the reception counter 303, and the count value of the exception counter 305 to an initial state;
if it is determined that the APP is in the normal running state, independently increase the count value of the transmission counter 301 and the count value of the reception counter 303, and keep the count value of the exception counter 305 unchanged;
if it is determined that the APP is in the abnormal state, restore the count value of the transmission counter 301, the count value of the reception counter 303, and the count value of the exception counter 305 to an initial state; and
if it is determined that the APP is in the critical normal state, increase the count value of the exception counter 305, and restore both the count value of the transmission counter and the count value of the reception counter 303 to an initial state.

In conclusion, according to the intelligent detection method and detection system for a refrigerator in the present invention, the APP disposed on the refrigerator actively sends the running monitoring signal to the refrigerator in real time, and the running status of the APP is automatically monitored and adjusted according to the number of times and time of receiving and sending the running monitoring signal, to ensure normal running of the APP, improve running efficiency of the refrigerator, and reduce human resources and costs.

In several embodiments provided in the present invention, it should be understood that the embodiments of the described structure, system, and method are merely exemplary. For example, division of modules is merely logical functional division, and there may be another division manner during actual implementation. For example, multiple modules or components may be combined or integrated into another apparatus, or some features may be ignored or not executed. In addition, the displayed or discussed mutual couplings or direct couplings or communication connections may be implemented by some interfaces. The indirect couplings or communication connections between apparatuses or modules may be implemented in electronic, mechanical, or other forms.

The modules described as separate parts may or may not be physically separated, and parts displayed as modules may or may not be physical modules, that is, it may be located in one position, or may be distributed on a plurality of network modules. Some or all of the modules may be selected according to actual needs to achieve the objectives of the solutions of the embodiments.

In addition, functional modules in the embodiments of the present invention may be integrated into one processing module, or each of the modules may exist alone physically, or two or more modules may be integrated into one module. The integrated module may be implemented in a form of hardware, or may be implemented in a form of hardware plus a software functional module.

## Claims

1. An intelligent detection method performed by an intelligent detection system for a refrigerator, comprising:
receiving (S 1), in real time, a running monitoring signal that is sent by an APP based on a predetermined interval, the APP being disposed on the refrigerator;
acquiring a count value of a transmission counter (301) used for recording the number of times of sending the running monitoring signal,
a count value of a reception counter (303) used for recording the number of times of receiving the running monitoring signal, and
a count value of an exception counter (305) used for recording the number of times of error occurrences of the APP;
determining (S2) a running status of the APP according to the count value of the transmission counter (301), the count value of the reception counter (303), and the count value of the exception counter (305); and
modifying (S3) the count value of the transmission counter (301), the count value of the reception counter (303), and the count value of the exception counter (305) according to the running status of the APP.

2. The intelligent detection method of claim 1, further comprising:
if the APP sends the running monitoring signal within the predetermined interval, increasing the count value of the transmission counter (301);
if the running monitoring signal is received within the predetermined interval, increasing the count value of the reception counter (303); and
if an error occurs on the APP, increasing the count value of the exception counter (305).

3. The intelligent detection method of claim 2, wherein
if the running monitoring signals sent by the APP are constantly received when each predetermined interval arrives,
said "determining a running status of the APP according to the count value of the transmission counter (301), the count value of the reception counter (303), and the count value of the exception counter (305)" specifically comprises:
M1. determining the running status of the APP according to a size relationship between the count value of the transmission counter (301) and the count value of the reception counter (303), and
if the count value of the transmission counter (301) is equal to the count value of the reception counter (303), entering step M2, and
if the count value of the transmission counter (301) is less than the count value of the reception counter (303), entering step M3;
M2. determining whether the count value of the reception counter (303) is greater than or equal to a system-preset threshold of receiving count, and
if yes, determining that the APP is in a good running state, and
if not, determining that the APP is in a normal running state;
M3. determining whether the count value of the exception counter (305) is greater than or equal to a system-preset threshold of exception count, and
if yes, determining that the APP is in an abnormal state, and restarting the APP, and
if not, determining that the APP is in a critical normal state.

4. The intelligent detection method for a refrigerator of claim 2, wherein
if the running monitoring signals sent by the APP are not constantly received when each predetermined interval arrives,
said "determining a running status of the APP according to the count value of the transmission counter (301), the count value of the reception counter (303), and the count value of the exception counter (305)" specifically comprises:
P1. determining the running status of the APP according to the count value of the reception counter (303), and
if the count value of the reception counter (303) is zero, determining that the APP is in an abnormal state, and restarting the APP, and
if the count value of the reception counter (303) is not zero, entering step P2;
P2. determining whether the count value of the exception counter (305) is greater than or equal to a system-preset threshold of exception count, and
if yes, determining that the APP is in an abnormal state, and restarting the APP, and
if not, determining that the APP is in a critical normal state.

5. The intelligent detection method for a refrigerator of claim 3 or 4, wherein
said "modifying the count value of the transmission counter (301), the count value of the reception counter (303), and the count value of the exception counter (305) according to the running status of the APP" specifically comprises:
if it is determined that the APP is in the good running state, restoring the count value of the transmission counter (301), the count value of the reception counter (303), and the count value of the exception counter (305) to an initial state;
if it is determined that the APP is in the normal running state, independently increasing the count value of the transmission counter (301) and the count value of the reception counter (303), and keeping the count value of the exception counter (305) unchanged;
if it is determined that the APP is in the abnormal state, restoring the count value of the transmission counter (301), the count value of the reception counter (303), and the count value of the exception counter (305) to an initial state; and
if it is determined that the APP is in the critical normal state, increasing the count value of the exception counter (305), and restoring the count value of the transmission counter (301) and the count value of the reception counter (303) to an initial state.

6. An intelligent detection system for a refrigerator, comprising:
a data acquisition module (100), a data processing module (200), and a storage module (300), wherein the storage module (300) comprises: a transmission counter (301) used for recording the number of times of sending a running monitoring signal, a reception counter (303) used for recording the number of times of receiving the running monitoring signal, and an exception counter (305) used for recording the number of times of error occurrences of an APP, the APP being disposed on the refrigerator;
the data acquisition module (100) is configured to receive, in real time, the running monitoring signal that is sent by the APP based on a predetermined interval, and acquire a count value of the transmission counter (301), a count value of the reception counter (303), and a count value of the exception counter (305); and
the data processing module (200) is configured to determine a running status of the APP according to the count value of the transmission counter (301), the count value of the reception counter (303), and the count value of the exception counter (305); and
modify the count value of the transmission counter (301), the count value of the reception counter (303), and the count value of the exception counter (305) according to the running status of the APP.

7. The intelligent detection system for a refrigerator of claim 6, wherein the data processing module (200) is further configured to: if the APP sends the running monitoring signal within the predetermined interval, increase the count value of the transmission counter (301);
if the running monitoring signal is received within the predetermined interval, increase the count value of the reception counter (303); and
if an error occurs on the APP, increase the count value of the exception counter.

8. The intelligent detection system for a refrigerator of claim 7, wherein
if the data acquisition module (100) constantly receives the running monitoring signals sent by the APP when each predetermined interval arrives;
the data processing module (200) is specifically configured to:
determine the running status of the APP according to a size relationship between the count value of the transmission counter (301) and the count value of the reception counter (303);
if the count value of the transmission counter (301) is equal to the count value of the reception counter (303), determine whether the count value of the reception counter (303) is greater than or equal to a system-preset threshold of receiving count, and
if yes, determine that the APP is in a good running state, and
if not, determine that the APP is in a normal running state;
if the count value of the transmission counter (301) is less than the count value of the reception counter (303), determine whether the count value of the exception counter is greater than or equal to a system-preset threshold of exception count, and
if yes, determine that the APP is in an abnormal state, and restart the APP, and
if not, determine that the APP is in a critical normal state.

9. The intelligent detection system for a refrigerator of claim 7, wherein
if the data acquisition module (100) does not constantly receive the running monitoring signals sent by the APP when each predetermined interval arrives;
the data processing module (200) is specifically configured to:
determine the running status of the APP according to the count value of the reception counter (303);
if the count value of the reception counter (303) is zero, determine that the APP is in an abnormal state, and restart the APP; and
if the count value of the reception counter (303) is not zero, determine whether the count value of the exception counter is greater than or equal to a system-preset threshold of exception count, and
if yes, determine that the APP is in an abnormal state, and restart the APP, and
if not, determine that the APP is in a critical normal state.

10. The intelligent detection system for a refrigerator of claim 8, wherein the data processing module (200) is specifically configured to:
if it is determined that the APP is in the good running state, restore the count value of the transmission counter (301), the count value of the reception counter (303), and the count value of the exception counter to an initial state;
if it is determined that the APP is in the normal running state, independently increase the count value of the transmission counter (301) and the count value of the reception counter (303), and keep the count value of the exception counter unchanged;
if it is determined that the APP is in the abnormal state, restore the count value of the transmission counter (301), the count value of the reception counter (303), and the count value of the exception counter to an initial state; and
if it is determined that the APP is in the critical normal state, increase the count value of the exception counter, and restore the count value of the transmission counter (301) and the count value of the reception counter (303) to an initial state.

11. A refrigerator, comprising the intelligent detection system of claim 6.

## Patentansprüche

1. Intelligentes Erkennungsverfahren, das von einem intelligenten Erkennungssystem für einen Kühlschrank durchgeführt wird, umfassend:
Empfangen (S1) in Echtzeit eines Betriebsüberwachungssignals, das von einer APP basierend auf einem vorgegebenen Intervall gesendet wird, wobei die APP auf dem Kühlschrank angeordnet ist,
Erfassen eines Zählwerts eines Übertragungszählers (301), der zum Aufzeichnen der Häufigkeit des Sendens des Betriebsüberwachungssignals verwendet wird,
einen Zählwert eines Empfangszählers (303), der zum Aufzeichnen der Häufigkeit des Empfangs des Betriebsüberwachungssignals verwendet wird, und
einen Zählwert eines Ausnahmezählers (305), der zum Aufzeichnen der Häufigkeit des Auftretens von Fehlern der APP verwendet wird,
Bestimmen (S2) eines Betriebszustands der APP gemäß dem Zählwert des Übertragungszählers (301), dem Zählwert des Empfangszählers (303) und dem Zählwert des Ausnahmezählers (305); und
Modifizieren (S3) des Zählwerts des Übertragungszählers (301), des Zählwerts des Empfangszählers (303) und des Zählwerts des Ausnahmezählers (305) gemäß dem Betriebszustand der APP.

2. Intelligentes Erkennungsverfahren nach Anspruch 1, weiterhin umfassend:
Erhöhen des Zählwerts des Übertragungszählers (301), wenn die APP das Betriebsüberwachungssignal innerhalb des vorgegebenen Intervalls sendet,
Erhöhen des Zählwerts des Empfangszählers (303), wenn das Betriebsüberwachungssignal innerhalb des vorgegebenen Intervalls empfangen wird, und
Erhöhen des Zählwerts des Ausnahmezählers (305), wenn in der APP ein Fehler auftritt.

3. Intelligentes Erkennungsverfahren nach Anspruch 2, wobei
wenn die von der APP gesendeten Betriebsüberwachungssignale bei Erreichen jedes vorgegebenen Intervalls ständig empfangen werden,
das "Bestimmen eines Betriebszustands der APP gemäß dem Zählwert des Übertragungszählers (301), dem Zählwert des Empfangszählers (303) und dem Zählwert des Ausnahmezählers (305)" insbesondere umfasst:
M1. Bestimmen eines Betriebszustands der APP gemäß einer Größenbeziehung zwischen dem Zählwert des Übertragungszählers (301) und dem Zählwert des Empfangszählers (303); und
wenn der Zählwert des Übertragungszählers (301) gleich dem Zählwert des Empfangszählers (303) ist, Eintritt in Schritt M2, und
wenn der Zählwert des Übertragungszählers (301) kleiner als dem Zählwert des Empfangszählers (303) ist, Eintritt in Schritt M3,
M2. Bestimmen, ob der Zählwert des Empfangszählers (303) größer oder gleich einem vom System voreingestellten Schwellenwert der Empfangszählung ist,
wenn ja, Bestimmen, dass die APP in einem guten Betriebszustand ist, und
wenn nicht, Bestimmen, dass sich die APP in einem normalen Betriebszustand befindet,
M3. Bestimmen, ob der Zählwert des Ausnahmezählers (305) größer oder gleich einem vom System voreingestellten Schwellenwert der Ausnahmezählung ist, und
wenn ja, Bestimmen, dass sich die APP in einem abnormalen Zustand befindet, und Neustarten der APP, und
wenn nicht, Bestimmen, dass sich die APP in einem kritischen Normalzustand befindet.

4. Intelligentes Erkennungsverfahren für einen Kühlschrank nach Anspruch 2, wobei
wenn die von der APP gesendeten Betriebsüberwachungssignale bei Erreichen jedes vorgegebenen Intervalls nicht ständig empfangen werden,
das "Bestimmen eines Betriebsstatus der APP gemäß dem Zählwert des Übertragungszählers (301), dem Zählwert des Empfangszählers (303) und dem Zählwert des Ausnahmezählers (305)" insbesondere umfasst:
P1. Bestimmen des Betriebszustands der APP gemäß dem Zählwert des Empfangszählers (303), und
wenn der Zählwert des Empfangszählers (303) Null ist, Bestimmen, dass sich die APP in einem abnormalen Zustand befindet, und Neustarten der APP, und
wenn der Zählwert des Empfangszählers (303) nicht Null ist, Eintritt in Schritt P2;
P2. Bestimmen, ob der Zählwert des Ausnahmezählers (305) größer oder gleich einem vom System voreingestellten Schwellenwert der Ausnahmezählung ist, und
wenn ja, Bestimmen, dass sich die APP in einem abnormalen Zustand befindet, und Neustarten der APP, und
wenn nicht, Bestimmen, dass sich die APP in einem kritischen Normalzustand befindet.

5. Intelligentes Erkennungsverfahren für einen Kühlschrank nach Anspruch 3 oder 4, wobei das "Modifizieren des Zählwerts des Übertragungszählers (301), des Zählwerts des Empfangszählers (303) und des Zählwerts des Ausnahmezählers (305) gemäß dem Betriebszustand der APP" insbesondere umfasst:
wenn bestimmt wird, dass sich die APP in einem guten Betriebszustand befindet, Zurücksetzen des Zählwerts des Übertragungszählers (301), des Zählwerts des Empfangszählers (303) und des Zählwerts des Ausnahmezählers (305) auf einen Ausgangszustand;
wenn bestimmt wird, dass sich die APP im normalen Betriebszustand befindet, unabhängiges Erhöhen des Zählwerts des Übertragungszählers (301) und des Zählwerts des Empfangszählers (303) und Beibehalten des Zählwerts des Ausnahmezählers (305) unverändert;
wenn bestimmt wird, dass sich die APP im abnormalen Zustand befindet, Zurücksetzen des Zählwerts des Übertragungszählers (301), des Zählwerts des Empfangszählers (303) und des Zählwerts des Ausnahmezählers (305) auf einen Ausgangszustand; und
wenn bestimmt wird, dass sich die APP im kritischen Normalzustand befindet, Erhöhen des Zählwerts des Ausnahmezählers (305) und Zurücksetzen des Zählwerts des Übertragungszählers (301) und des Zählwerts des Empfangszählers (303) auf einen Ausgangszustand.

6. Intelligentes Erkennungssystem für einen Kühlschrank, umfassend:
ein Datenerfassungsmodul (100), ein Datenverarbeitungsmodul (200) und ein Speichermodul (300), wobei das Speichermodul (300) umfasst: einen Übertragungszähler (301), der zum Aufzeichnen der Häufigkeit des Sendens eines Betriebsüberwachungssignals verwendet wird, einen Empfangszähler (303), der zum Aufzeichnen der Häufigkeit des Empfangs des Betriebsüberwachungssignals verwendet wird, und einen Ausnahmezähler (305), der zum Aufzeichnen der Häufigkeit des Auftretens von Fehlern einer APP verwendet wird, wobei die APP auf dem Kühlschrank angeordnet ist,
wobei das Datenerfassungsmodul (100) konfiguriert ist, um in Echtzeit das Betriebsüberwachungssignal zu empfangen, das von der APP basierend auf einem vorgegebenen Intervall gesendet wird, und um einen Zählwert des Übertragungszählers (301), einen Zählwert des Empfangszählers (303) und einen Zählwert des Ausnahmezählers (305) zu erfassen; und
wobei das Datenverarbeitungsmodul (200) so konfiguriert ist, um einen Betriebsstatus der APP gemäß dem Zählwert des Übertragungszählers (301), dem Zählwert des Empfangszählers (303) und dem Zählwert des Ausnahmezählers (305) zu bestimmen; und
um den Zählwert des Übertragungszählers (301), den Zählwert des Empfangszählers (303) und den Zählwert des Ausnahmezählers (305) gemäß dem Betriebszustand der APP zu modifizieren.

7. Intelligentes Erkennungssystem für einen Kühlschrank nach Anspruch 6, wobei das Datenverarbeitungsmodul (200) ferner so konfiguriert ist,
um den Zählwert des Übertragungszählers (301) zu erhöhen, wenn die APP das Betriebsüberwachungssignal innerhalb des vorgegebenen Intervalls sendet,
um den Zählwert des Empfangszählers (303) zu erhöhen, wenn das Betriebsüberwachungssignal innerhalb des vorgegebenen Intervalls empfangen wird, und
um den Zählwert des Ausnahmezählers zu erhöhen, wenn in der APP ein Fehler auftritt.

8. Intelligentes Erkennungssystem für einen Kühlschrank nach Anspruch 7, wobei
wenn das Datenerfassungsmodul (100) die von der APP gesendeten Betriebsüberwachungssignale bei Erreichen jedes vorgegebenen Intervalls ständig empfängt, das Datenverarbeitungsmodul (200) speziell konfiguriert ist,
Bestimmen eines Betriebszustands der APP gemäß einer Größenbeziehung zwischen dem Zählwert des Übertragungszählers (301) und dem Zählwert des Empfangszählers (303);
wenn der Zählwert des Übertragungszählers (301) gleich dem Zählwert des Empfangszählers (303) ist, Bestimmen, ob der Zählwert des Empfangszählers (303) größer oder gleich einem vom System voreingestellten Schwellenwert der Empfangszählung ist, und
wenn ja, Bestimmen, dass die APP in einem guten Betriebszustand ist, und
wenn nicht, Bestimmen, dass sich die APP in einem normalen Betriebszustand befindet,
wenn der Zählwert des Übertragungszählers (301) kleiner als der Zählwert des Empfangszählers (303) ist, Bestimmen, ob der Zählwert des Ausnahmezählers größer oder gleich einem vom System voreingestellten Schwellenwert der Ausnahmezählung ist, und
wenn ja, Bestimmen, dass sich die APP in einem abnormalen Zustand befindet, und Neustarten der APP, und
wenn nicht, Bestimmen, dass sich die APP in einem kritischen Normalzustand befindet.

9. Intelligentes Erkennungssystem für einen Kühlschrank nach Anspruch 7, wobei
wenn das Datenerfassungsmodul (100) die von der APP gesendeten Betriebsüberwachungssignale bei Erreichen jedes vorgegebenen Intervalls nicht ständig empfängt,
das Datenverarbeitungsmodul (200) speziell konfiguriert ist,
Bestimmen des Betriebszustands der APP gemäß dem Zählwert des Empfangszählers (303);
wenn der Zählwert des Empfangszählers (303) Null ist, Bestimmen, dass sich die APP in einem abnormalen Zustand befindet, und Neustarten der APP, und
wenn der Zählwert des Empfangszählers (303) nicht Null ist, Bestimmen, ob der Zählwert des Ausnahmezählers größer oder gleich einem vom System voreingestellten Schwellenwert der Ausnahmezählung ist, und
wenn ja, Bestimmen, dass sich die APP in einem abnormalen Zustand befindet, und Neustarten der APP, und
wenn nicht, Bestimmen, dass sich die APP in einem kritischen Normalzustand befindet.

10. Intelligentes Erkennungssystem für einen Kühlschrank nach Anspruch 8, wobei das Datenverarbeitungsmodul (200) speziell dafür konfiguriert ist,
wenn bestimmt wird, dass sich die APP in einem guten Betriebszustand befindet, Zurücksetzen des Zählwerts des Übertragungszählers (301), des Zählwerts des Empfangszählers (303) und des Zählwerts des Ausnahmezählers auf einen Ausgangszustand;
wenn bestimmt wird, dass sich die APP im normalen Betriebszustand befindet, unabhängiges Erhöhen des Zählwerts des Übertragungszählers (301) und des Zählwerts des Empfangszählers (303) und Beibehalten des Zählwerts des Ausnahmezählers unverändert;
wenn bestimmt wird, dass sich die APP im abnormalen Zustand befindet, Zurücksetzen des Zählwerts des Übertragungszählers (301), des Zählwerts des Empfangszählers (303) und des Zählwerts des Ausnahmezählers auf einen Ausgangszustand; und
wenn bestimmt wird, dass sich die APP im kritischen Normalzustand befindet, Erhöhen des Zählwerts des Ausnahmezählers und Zurücksetzen des Zählwerts des Übertragungszählers (301) und des Zählwerts des Empfangszählers (303) auf einen Ausgangszustand.

11. Kühlschrank, der das intelligente Erkennungssystem nach Anspruch 6 umfasst.

## Revendications

1. Procédé de détection intelligent mis en oeuvre par un système de détection intelligent pour un réfrigérateur, comprenant les étapes suivantes
la réception (S1), en temps réel, d'un signal de surveillance de fonctionnement envoyé par une application selon un intervalle prédéterminé, l'application étant installée sur le réfrigérateur ;
l'acquisition d'une valeur de comptage d'un compteur de transmission (301) utilisé pour enregistrer le nombre de fois d'envoi du signal de surveillance de fonctionnement,
d'une valeur de comptage d'un compteur de réception (303) utilisé pour enregistrer le nombre de fois de réception du signal de surveillance de fonctionnement, et
d'une valeur de comptage d'un compteur d'exceptions (305) utilisé pour enregistrer le nombre de fois d'occurrences d'erreurs de l'application;
la détermination (S2) d'un état de fonctionnement de l'application en fonction de la valeur de comptage du compteur de transmission (301), de la valeur de comptage du compteur de réception (303) et de la valeur de comptage du compteur d'exceptions (305) ; et
la modification (S3) de la valeur de comptage du compteur de transmission (301), de la valeur de comptage du compteur de réception (303) et de la valeur de comptage du compteur d'exceptions (305) en fonction de l'état de fonctionnement de l'application.

2. Procédé de détection intelligent selon la revendication 1, comprenant en outre :
l'augmentation de la valeur de comptage du compteur de transmission (301) si l'application envoie le signal de surveillance de fonctionnement dans l'intervalle prédéterminé ;
l'augmentation de la valeur de comptage du compteur de réception (303) si le signal de surveillance de fonctionnement est reçu dans l'intervalle prédéterminé ; et
l'augmentation de la valeur de comptage du compteur d'exceptions (305) en cas d'erreur de l'application.

3. Procédé de détection intelligent selon la revendication 2, dans lequel
si les signaux de surveillance de fonctionnement envoyés par l'application sont constamment reçus à l'arrivée de chaque intervalle prédéterminé,
ladite « détermination d'un état de fonctionnement de l'application en fonction de la valeur de comptage du compteur de transmission (301), de la valeur de comptage du compteur de réception (303) et de la valeur de comptage du compteur d'exceptions (305) » comprend spécifiquement :
M1. la détermination de l'état de fonctionnement de l'application en fonction d'une relation de taille entre la valeur de comptage du compteur de transmission (301) et la valeur de comptage du compteur de réception (303), et
si la valeur de comptage du compteur de transmission (301) est égale à la valeur de comptage du compteur de réception (303), passage à l'étape M2, et
si la valeur de comptage du compteur de transmission (301) est inférieure à la valeur de comptage du compteur de réception (303), passage à l'étape M3 ;
M2. la détermination de si la valeur de comptage du compteur de réception (303) est supérieure ou égale à un seuil prédéfini par le système de comptage de réception, et
dans l'affirmative, la détermination que l'application est dans un bon état de fonctionnement, et
dans la négative, la détermination que l'application est dans un état de fonctionnement normal ;
M3. la détermination de si la valeur de comptage du compteur d'exceptions (305) est supérieure ou égale à un seuil prédéfini par le système de comptage des exceptions, et
dans l'affirmative, la détermination que l'application est dans un état anormal et le redémarrage de l'application, et
dans la négative, la détermination que l'application est dans un état normal critique.

4. Procédé de détection intelligent pour réfrigérateur selon la revendication 2, dans lequel
si les signaux de surveillance de fonctionnement envoyés par l'application ne sont pas constamment reçus à l'arrivée de chaque intervalle prédéterminé,
ladite « détermination d'un état de fonctionnement de l'application en fonction de la valeur de comptage du compteur de transmission (301), de la valeur de comptage du compteur de réception (303) et de la valeur de comptage du compteur d'exceptions (305) » comprend spécifiquement :
P1. la détermination de l'état de fonctionnement de l'application en fonction de la valeur de comptage du compteur de réception (303), et
si la valeur de comptage du compteur de réception (303) est nulle, la détermination que l'application est dans un état anormal et le redémarrage de l'application, et
si la valeur de comptage du compteur de réception (303) n'est pas nulle, passage à l'étape P2 ;
P2. la détermination de si la valeur de comptage du compteur d'exceptions (305) est supérieure ou égale à un seuil prédéfini par le système de comptage des exceptions, et
dans l'affirmative, la détermination que l'application est dans un état anormal et le redémarrage de l'application, et
dans la négative, la détermination que l'application est dans un état normal critique.

5. Procédé de détection intelligent pour réfrigérateur selon la revendication 3 ou 4, dans lequel
ladite « modification de la valeur de comptage du compteur de transmission (301), de la valeur de comptage du compteur de réception (303) et de la valeur de comptage du compteur d'exceptions (305) en fonction de l'état de fonctionnement de l'application » comprend spécifiquement :
si il est déterminé que l'application est dans un bon état de fonctionnement, la restauration de la valeur de comptage du compteur de transmission (301), de la valeur de comptage du compteur de réception (303) et de la valeur de comptage du compteur d'exceptions (305) à un état initial ;
si il est déterminé que l'application est dans un état de fonctionnement normal, l'augmentation indépendante de la valeur de comptage du compteur de transmission (301) et de la valeur de comptage du compteur de réception (303), et le maintien de la valeur de comptage du compteur d'exceptions (305) inchangée ;
si il est déterminé que l'application est dans un état anormal, la restauration de la valeur de comptage du compteur de transmission (301), de la valeur de comptage du compteur de réception (303) et de la valeur de comptage du compteur d'exceptions (305) à un état initial ; et
si il est déterminé que l'application est dans un état normal critique, l'augmentation de la valeur de comptage du compteur d'exceptions (305) et la restauration de la valeur de comptage du compteur de transmission (301) et de la valeur de comptage du compteur de réception (303) à un état initial.

6. Système de détection intelligent pour réfrigérateur, comprenant :
un module d'acquisition de données (100), un module de traitement de données (200) et un module de stockage (300), le module de stockage (300) comprenant : un compteur de transmission (301) utilisé pour enregistrer le nombre de fois d'envoi d'un signal de surveillance de fonctionnement, un compteur de réception (303) utilisé pour enregistrer le nombre de fois de réception du signal de surveillance de fonctionnement, et un compteur d'exceptions (305) utilisé pour enregistrer le nombre de fois d'occurrences d'erreurs d'une application, l'application étant disposée sur le réfrigérateur ;
le module d'acquisition de données (100) étant configuré pour recevoir, en temps réel, le signal de surveillance de fonctionnement envoyé par l'application selon un intervalle prédéterminé, et acquérir une valeur de comptage du compteur de transmission (301), une valeur de comptage du compteur de réception (303) et une valeur de comptage du compteur d'exceptions (305) ; et
le module de traitement de données (200) étant configuré pour déterminer un état de fonctionnement de l'application en fonction de la valeur de comptage du compteur de transmission (301), de la valeur de comptage du compteur de réception (303) et de la valeur de comptage du compteur d'exceptions (305) ; et
modifier la valeur de comptage du compteur de transmission (301), la valeur de comptage du compteur de réception (303) et la valeur de comptage du compteur d'exceptions (305) en fonction de l'état de fonctionnement de l'application.

7. Système de détection intelligent pour réfrigérateur selon la revendication 6, dans lequel le module de traitement de données (200) est en outre configuré pour :
augmenter la valeur de comptage du compteur de transmission (301) si l'application envoie le signal de surveillance de fonctionnement dans l'intervalle prédéterminé ;
augmenter la valeur de comptage du compteur de réception (303) si le signal de surveillance de fonctionnement est reçu dans l'intervalle prédéterminé ; et
augmenter la valeur de comptage du compteur d'exceptions en cas d'erreur de l'application.

8. Système de détection intelligent pour réfrigérateur selon la revendication 7, dans lequel
si le module d'acquisition de données (100) reçoit constamment les signaux de surveillance de fonctionnement envoyés par l'application à l'arrivée de chaque intervalle prédéterminé ;
le module de traitement de données (200) est spécifiquement configuré pour :
déterminer l'état de fonctionnement de l'application en fonction d'une relation de taille entre la valeur de comptage du compteur de transmission (301) et la valeur de comptage du compteur de réception (303) ;
si la valeur de comptage du compteur de transmission (301) est égale à la valeur de comptage du compteur de réception (303), déterminer si la valeur de comptage du compteur de réception (303) est supérieure ou égale à un seuil prédéfini par le système de comptage de réception, et
dans l'affirmative, déterminer que l'application est dans un bon état de fonctionnement, et
dans la négative, déterminer que l'application est dans un état de fonctionnement normal ;
si la valeur de comptage du compteur de transmission (301) est inférieure à la valeur de comptage du compteur de réception (303), déterminer si la valeur de comptage du compteur d'exceptions est supérieure ou égale à un seuil prédéfini par le système de comptage des exceptions, et
dans l'affirmative, déterminer que l'application est dans un état anormal et redémarrer l'application, et
dans la négative, déterminer que l'application est dans un état normal critique.

9. Système de détection intelligent pour réfrigérateur selon la revendication 7, dans lequel
si le module d'acquisition de données (100) ne reçoit pas constamment les signaux de surveillance de fonctionnement envoyés par l'application à l'arrivée de chaque intervalle prédéterminé ;
le module de traitement de données (200) est spécifiquement configuré pour :
déterminer l'état de fonctionnement de l'application en fonction de la valeur de comptage du compteur de réception (303) ;
si la valeur de comptage du compteur de réception (303) est nulle, déterminer que l'application est dans un état anormal et redémarrer l'application ; et
si la valeur de comptage du compteur de réception (303) n'est pas nulle, déterminer si la valeur de comptage du compteur d'exceptions est supérieure ou égale à un seuil prédéfini par le système de comptage des exceptions, et
dans l'affirmative, déterminer que l'application est dans un état anormal et redémarrer l'application, et
dans la négative, déterminer que l'application est dans un état normal critique.

10. Système de détection intelligent pour réfrigérateur selon la revendication 8, dans lequel le module de traitement de données (200) est spécifiquement configuré pour :
si il est déterminé que l'application est dans un bon état de fonctionnement, restaurer la valeur de comptage du compteur de transmission (301), la valeur de comptage du compteur de réception (303) et la valeur de comptage du compteur d'exceptions à un état initial ;
si il est déterminé que l'application est dans un état de fonctionnement normal, augmenter indépendamment la valeur de comptage du compteur de transmission (301) et la valeur de comptage du compteur de réception (303), et maintenir la valeur de comptage du compteur d'exceptions inchangée ;
si il est déterminé que l'application est dans un état anormal, restaurer la valeur de comptage du compteur de transmission (301), de la valeur de comptage du compteur de réception (303) et de la valeur de comptage du compteur d'exceptions à un état initial ; et
si il est déterminé que l'application est dans un état normal critique, augmenter la valeur de comptage du compteur d'exceptions et restaurer la valeur de comptage du compteur de transmission (301) et la valeur de comptage du compteur de réception (303) à un état initial.

11. Réfrigérateur comprenant le système de détection intelligent selon la revendication 6.
